# EUROPÄISCHE PATENTSCHRIFT

(11) **EP 2 730 828 B1**
(45) Veröffentlichungstag und Bekanntmachung des Hinweises auf die Patenterteilung: **20.04.2016**
(21) Anmeldenummer: 13189344.8
(22) Anmeldetag: 18.10.2013
(51) Int. Cl.: F16L 19/00, F16L 19/02, F16L 19/028, F02M 55/00, B60T 17/04

(54) **Schraubverbindungsvorrichtung für Rohrleitungen, insbesondere für Kraftfahrzeugrohrleitungen**
Screw connection device for conduits, in particular for motor vehicle conduits
Dispositif de raccord fileté pour conduites tubulaires, en particulier pour conduites tubulaires de véhicules automobiles

(30) Priorität: 12.11.2012 DE 202012104347 U
(43) Veröffentlichungstag der Anmeldung: 14.05.2014
(60) Teilanmeldung: 16154500.9
(73) Patentinhaber: TI Automotive (Heidelberg) GmbH, 69123 Heidelberg (DE)
(72) Erfinder: Fiedler, Uwe, 68804 Altulssheim (DE); Stahn, Andreas, 69231 Rauenberg (DE); Oezbenlikan, Uenal, 69231 Rauenberg (DE)
(74) Vertreter: Rohmann, Michael

(56) Entgegenhaltungen:
- EP-A1- 1 260 750
- EP-A1- 1 624 183
- EP-A2- 1 241 348
- CH-A- 526 066
- DE-A1- 2 910 678
- DE-A1-102004 018 217
- DE-A1-102010 004 918
- US-A- 5 332 267
- US-A1- 2009 189 391

## Beschreibung

Die Erfindung betrifft eine Schraubverbindungsvorrichtung für Rohrleitungen, insbesondere für Kraftfahrzeugrohrleitungen. Im Rahmen der Erfindung wird zumindest eine Rohrleitung bzw. Kraftfahrzeugrohrleitung mit einer weiteren Rohrleitung bzw. Anschlussleitung oder einem Anschlussaggregat verbunden. - Kraftfahrzeugrohrleitung meint im Rahmen der Erfindung insbesondere eine Kraftstoffleitung oder eine Leitung für Bremsflüssigkeit. Schraubverbindungsvorrichtungen der eingangs genannten Art sind aus der Praxis in unterschiedlichen Ausführungsformen bekannt. Viele dieser bekannten Schraubverbindungsvorrichtungen zeichnen sich durch ein nachteilhaft geringes Lockerungsdrehmoment bzw. Lösedrehmoment sowie durch einen zu geringen Lösedrehwinkel bzw. Lockerungsdrehwinkel aus. Beim Verschrauben dieser Schraubverbindungsvorrichtungen kann es insbesondere zu einem Mitdrehen der Rohrleitung kommen und durch eine Torsion der Rohrleitung wird Federkraft gleichsam in der Rohrleitung gespeichert. Die Torsion der Rohrleitung erzeugt ein Rückdrehmoment, das zu einem unerwünschten bzw. unkontrollierten Lockern bzw. Lösen der Schraubverbindungsvorrichtung führen kann. Ein unerwünschtes Lockern bzw. Lösen der Schraubverbindungsvorrichtung kann insbesondere auch durch Vibrationen hervorgerufen werden, wie sie oftmals in Kraftfahrzeugen auftreten. Ein solches Lockern bzw. Lösen der Schraubverbindungsvorrichtung kann sehr nachteilhafte Leckagen zur Folge haben.

Dokument EP 1 241 348 A2 offenbart eine Schraubverbindungsvorrichtung gemäß dem Oberbegriff von Anspruch 1.

Demgegenüber liegt der Erfindung das technische Problem zugrunde, eine Schraubverbindungsvorrichtung der eingangs genannten Art anzugeben, mit der ein unerwünschtes Lockern oder Lösen der Schraubverbindung auf effektive und funktionssichere Weise vermieden werden kann.

Zur Lösung dieses technischen Problems lehrt die Erfindung eine Schraubverbindungsvorrichtung gemäß den Merkmalen von Anspruch 1.

Wie eingangs bereits dargelegt, meint Kraftfahrzeugrohrleitung im Rahmen der Erfindung insbesondere eine Kraftstoffleitung oder eine Rohrleitung für Bremsflüssigkeit. - Bevorzugt ist die zweckmäßigerweise stirnseitige Endform als Bördel ausgebildet. Bördel meint im Rahmen der Erfindung bekanntermaßen eine Aufweitung des Außendurchmessers der Rohrleitung bzw. des Rohrleitungsendes. Es liegt im Rahmen der Erfindung, dass die Endform bzw. der Bördel der Rohrleitung bzw. Kraftfahrzeugrohrleitung im verschraubten Zustand der Schraubverbindungsvorrichtung in dem Innenraum der Überwurfmutter aufgenommen ist.

Es liegt weiterhin im Rahmen der Erfindung, dass das Federelement im verschraubten Zustand der Schraubverbindungsvorrichtung an der Anschlagfläche der Überwurfmutter anliegt sowie an der Endformrückseite der Rohrleitung bzw. Kraftfahrzeugrohrleitung anliegt. Zweckmäßigerweise ist das Innengewinde der Überwurfmutter zumindest im vorderseitigen Bereich bzw. im anschlusselementseitigen Bereich der Überwurfmutter ausgebildet.
Es liegt im Rahmen der Erfindung, dass das Anschlusselement eine Anschlussrohrleitung oder eine mit einer Anschlussrohrleitung verbundene oder eine Anschlussrohrleitung aufnehmende Anschlusseinrichtung ist. Nach einer bevorzugten Ausführungsform der Erfindung ist das Anschlusselement ein eine Anschlussrohrleitung aufnehmender Schraubfitting mit einem Außengewinde. Gemäß einer anderen bevorzugten erfindungsgemäßen Ausführungsform ist das Außengewinde direkt an der anzuschließenden Rohrleitung bzw. an der Anschlussrohrleitung vorgesehen. Dann wird also die Überwurfmutter gleichsam auf die anzuschließende Rohrleitung bzw. auf die Anschlussrohrleitung aufgeschraubt. Es liegt im Rahmen der Erfindung, dass das Außengewinde des Anschlusselementes an dem der Überwurfmutter zugewandten Stirnende des Anschlusselementes angeordnet ist.

Erfindungsgemäß liegt die Endform des Rohrleitungsendes der Rohrleitung im verschraubten Zustand der Schraubverbindungsvorrichtung mit einer Anschlussfläche an einer Komplementäranschlussfläche des Anschlusselementes an. Es empfiehlt sich, dass die Anschlussfläche der Endform schräg zur Längsachse L der Rohrleitung angeordnet ist. Dabei kann die Anschlussfläche konisch oder abgerundet ausgestaltet sein. Die Komplementäranschlussfläche des Anschlusselementes ist dann entsprechend ebenfalls konisch oder abgerundet ausgebildet.

Es liegt im Rahmen der Erfindung, dass die Anschlagfläche des Innenraums der Überwurfmutter im Zuge des Verschraubens mit dem Federelement in Kontakt kommt und das Federelement in Kontakt mit der Endformrückseite kommt, so dass das Federelement im Zwischenraum zwischen der Anschlagfläche der Überwurfmutter und der Endformrückseite der Rohrleitung eingeschlossen bzw. eingeklemmt wird. Zweckmäßigerweise läuft die Anschlagfläche der Überwurfmutter über den Innenumfang des Innenraumes um.

Es liegt fernerhin im Rahmen der Erfindung, dass das Federelement vor dem Verschrauben der Schraubverbindungsvorrichtung an der Rohrleitung angeordnet ist bzw. hinter der Endform der Rohrleitung angeordnet ist. Zweckmäßigerweise ist das Federelement vor dem Verschrauben auf die Rohrleitung aufgeschoben und wird somit von der Rohrleitung gleichsam gehalten. Es empfiehlt sich, dass das Federelement bzw. das auf die Rohrleitung aufgeschobene Federelement in Längsrichtung der Rohrleitung verschiebbar ist. - Vorzugsweise wird das Federelement im Zuge des Verschraubens nach der Aufnahme im Zwischenraum zwischen Anschlagfläche und Endformrückseite zweckmäßigerweise elastisch verformt. Dadurch übt das Federelement eine das Lösedrehmoment erhöhende Kraft auf die Überwurfmutter bzw. auf das Innengewinde der Überwurfmutter aus. Gemäß besonders empfohlener Ausführungsform der Erfindung besteht das Federelement aus einem Metall bzw. im Wesentlichen aus einem Metall und vorzugsweise aus Stahl bzw. im Wesentlichen aus Stahl.

Es liegt im Rahmen der Erfindung, dass die Anschlagfläche der Überwurfmutter schräg in Bezug auf die Längsachse L der Rohrleitung bzw. die Längsachse L der Überwurfmutter angeordnet ist und dass vorzugsweise die Anschlagfläche der Überwurfmutter mit der Längsachse L der Rohrleitung bzw. mit der Längsachse L der Überwurfmutter einen Winkel α von 10° bis 170°, vorzugsweise von 20° bis 60°, bevorzugt von 30° bis 50° und nach einer Ausführungsvariante von 35° bis 45° einschließt. Es liegt im Rahmen der Erfindung, dass sich die vorstehend aufgeführten Winkelangaben auf den verschraubten Zustand der Schraubverbindungsvorrichtung beziehen.

Zweckmäßigerweise ist die überwurfmutterseitige Anschlagfläche des Federelementes schräg zur Längsachse L der Rohrleitung bzw. zur Längsachse L der Überwurfmutter angeordnet und bevorzugt schließt diese überwurfmutterseitige Anschlagfläche des Federelementes mit der Längsachse L der Rohrleitung einen Winkel α₁ von 10° bis 170°, vorzugsweise von 20° bis 60°, empfohlenermaßen von 30° bis 50° und sehr bevorzugt von 35° bis 45° ein. Auch hier liegt es im Rahmen der Erfindung, dass sich die Winkelangaben auf den verschraubten Zustand der Schraubverbindungsvorrichtung beziehen. Vorzugsweise ist die endformseitige Anschlagfläche des Federelementes schräg zur Längsachse L der Rohrleitung angeordnet und empfohlenermaßen schließt diese endformseitige Anschlagfläche des Federelementes mit der Längsachse L der Rohrleitung einen Winkel α₂ von 10° bis 170°, vorzugsweise von 20° bis 60°, bevorzugt von 30° bis 50° und besonders bevorzugt von 35° bis 45° ein. Es liegt im Rahmen der Erfindung, dass sich diese Winkelangaben auf den verschraubten Zustand der Schraubverbindungsvorrichtung beziehen.

Es liegt weiterhin im Rahmen der Erfindung, dass die Endformrückseite der Endform der Rohrleitung schräg in Bezug auf die Längsachse L der Rohrleitung angeordnet ist und dass diese Endformrückseite bzw. die entsprechende Anschlagfläche der Endformrückseite mit der Längsachse L der Rohrleitung einen Winkel α₃ von 10° bis 170°, vorzugsweise von 20° bis 60°, empfohlenermaßen von 30° bis 50° und sehr empfohlenermaßen von 35° bis 45° einschließt. Auch diese Winkelangaben sind zweckmäßigerweise auf den verschraubten Zustand der Schraubverbindungsvorrichtung bezogen.

Eine alternative Ausführungsform ist dadurch gekennzeichnet, dass die Anschlagfläche der Überwurfmutter Bestandteil einer Anschlagschulter der Überwurfmutter ist und dass an die Anschlagfläche eine zur Anschlagfläche abgewinkelte Anlagefläche anschließt und dass vorzugsweise die Anlagefläche parallel bzw. im Wesentlichen parallel zur Längsachse L der Rohrleitung bzw. zur Längsachse L der Überwurfmutter angeordnet ist. Es liegt im Rahmen der Erfindung, dass die Anschlagfläche und die Anlagefläche der Anschlagschulter einen Winkel α₄ von 10° bis 170°, vorzugsweise von 20° bis 60°, bevorzugt von 30° bis 50° und besonders bevorzugt von 35° bis 45° einschließen.

Erfindungsgemäß weist das Federelement einen Anschlagabschnitt auf, an dem eine überwurfmutterseitige Anschlagfläche und eine endformseitige Anschlagfläche des Federelementes vorgesehen sind. Weiterhin weist das Federelement einen zu dem Anschlagabschnitt abgewinkelten Anlageabschnitt auf und erfindungsgemäß ist der abgewinkelte Anlageabschnitt parallel bzw. im Wesentlichen parallel zur Längsachse L der Rohrleitung bzw. zur Längsachse L der Überwurfmutter angeordnet. Es empfiehlt sich, dass der Anschlagabschnitt des Federelementes mit dem dazu abgewinkelten Anlageabschnitt einen Winkel α₅ von 10° bis 170°, vorzugsweise von 20° bis 60°, bevorzugt von 30° bis 50° und besonders bevorzugt von 35° bis 45° einschließt. Es liegt im Rahmen der Erfindung, dass der Anlageabschnitt des Federelementes im verschraubten Zustand der Schraubverbindungsvorrichtung einerseits an der Anlagefläche der Anschlagschulter der Überwurfmutter anliegt und andererseits an der Rohrleitung anliegt.

Eine weitere alternative bevorzugte Ausführungsform der Erfindung ist dadurch gekennzeichnet, dass das Federelement lediglich bzw. im Wesentlichen lediglich zwischen der Anschlagfläche der Überwurfmutter und der Endformrückseite angeordnet. ist. Bei dieser Ausführungsform besteht das Federelement quasi nur aus dem Anschlagabschnitt der vorstehend erläuterten ersten alternativen Ausführungsform der Erfindung.

Es liegt im Rahmen der Erfindung, dass die Rohrleitung eine zentralmittige Öffnung der Überwurfmutter durchgreift und dass die Anschlagfläche der Überwurfmutter an die zentralmittige Öffnung angrenzt bzw. anschließt. Dabei kann die zentralmittige Öffnung unmittelbar an die Anschlagfläche der Überwurfmutter anschließen oder unter Zwischenschaltung der oben beschriebenen Anlagefläche an die Anschlagfläche anschließen.

Eine besonders empfohlene Ausführungsform der Erfindung ist dadurch gekennzeichnet, dass die endformseitige Anschlagfläche des Federelementes mit einer Beschichtung mit einem geringen Reibwert µ versehen ist. Zweckmäßigerweise ist auch die zugeordnete Endformrückseite bzw. die zugeordnete Anschlagfläche der Endformrückseite der Rohrleitung mit einer Beschichtung mit einem geringen Reibwert µ versehen.

Der Erfindung liegt die Erkenntnis zugrunde, dass mit der erfindungsgemäßen Schraubverbindungsvorrichtung Rohrleitungen mit unter hohem Druck stehendem fluidem Medium einfach und kostengünstig miteinander verbunden werden können. Die Realisierung des erfindungsgemäßen Federelementes erlaubt eine einfache und gezielte Einstellung bzw. Optimierung der Reibungskräfte zwischen dem Innengewinde und den zugeordneten Kontaktbereichen. Durch die Geometrie des Federelementes kann die Größe der Kontaktflächen zwischen dem Federelement und der Endform bzw. dem Bördel und zwischen dem Federelement und der Überwurfmutter bzw. deren Verhältnis auf einfache Weise festgelegt werden. Das anfängliche Verschrauben der erfindungsgemäßen Schraubverbindungsvorrichtung ist mit geringen Reibungskräften und geringen Torsionskräften verbunden. Im verschraubten Zustand erhöhen sich die Reibungskräfte und Torsionskräfte. Ein unbeabsichtigtes Lösen bzw. eine unbeabsichtigte Lockerung der Verbindung bzw. Schraubverbindung kann weitgehend vermieden werden. Vorteilhafterweise bleibt das Drehmoment, das einem Lösen der Schraubverbindung entgegenwirkt, auch beim Drehen bzw. Öffnen der Schraubverbindung um wenige Grad konstant, da das Federelement weiterhin eine entsprechende Kraft auf die Überwurfmutter und somit auf das Innengewinde der Überwurfmutter ausübt. Dagegen ist ein einfaches beabsichtigtes Lösen bzw. Lockern der Schraubverbindung möglich.

Nachfolgend wird die Erfindung anhand einer lediglich ein Ausführungsbeispiel darstellenden Zeichnung näher erläutert. Es zeigen in schematischer Darstellung:
Fig. 1 einen Schnitt durch eine erste Ausführungsform der erfindungsgemäßen Schraubverbindungsvorrichtung im noch nicht verschraubten Zustand,
Fig. 2 den Gegenstand gemäß Fig. 1 im teilweise verschraubten Zustand,
Fig. 3 den Gegenstand nach Fig. 1 im vollständig verschraubten Zustand,
Fig. 4 den Gegenstand gemäß Fig. 1 in einer zweiten nicht erfingungsgemäßen Ausführungsform,
Fig. 5 den Gegenstand nach Fig. 2 in einer zweiten nicht erfindungsgemäßen Ausführungsform und
Fig. 6 den Gegenstand gemäß Fig. 3 in einer zweiten nicht erfindungsgemäßen Ausführungsform.

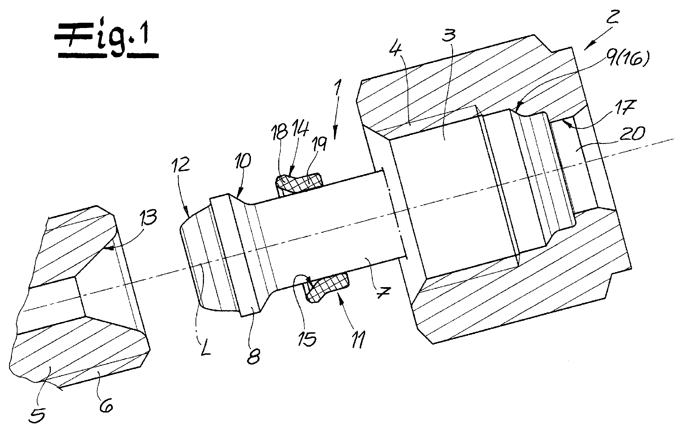

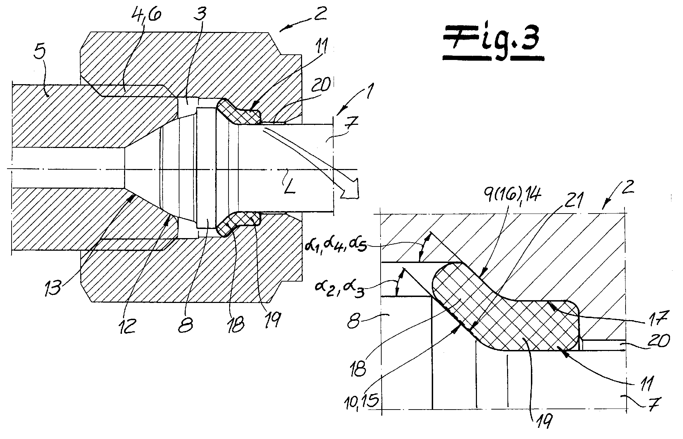

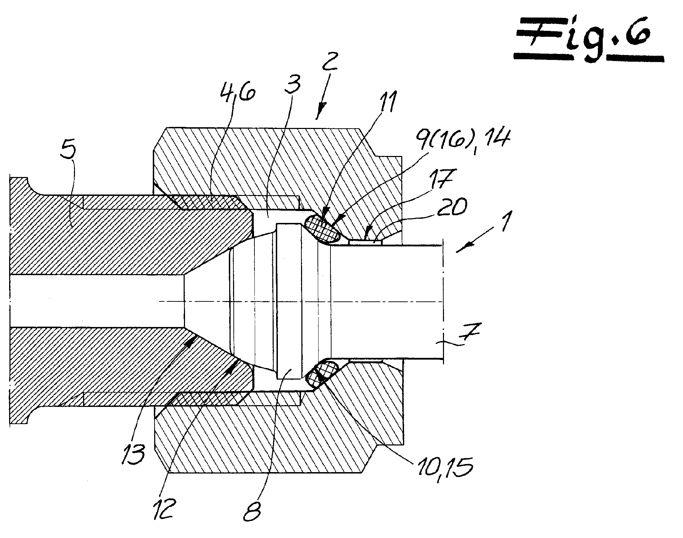

Die Figuren 1 bis 3 zeigen eine erfindungsgemäße Schraubverbindungsvorrichtung für Rohrleitungen 1, insbesondere für Kraftfahrzeugrohrleitungen. Die Schraubverbindungsvorrichtung weist eine Überwurfmutter 2 mit einem Innenraum 3 und mit einem über den Umfang des Innenraumes 3 umlaufenden Innengewinde 4 auf. Fernerhin weist die Schraubverbindungsvorrichtung ein Anschlusselement auf, das im Ausführungsbeispiel als Anschlussrohrleitung 5 ausgebildet ist und mit einem Außengewinde 6 ausgestattet ist. Im verschraubten Zustand der Schraubverbindungsvorrichtung (Fig. 3 und 6) greift das Außengewinde 6 in das Innengewinde 4 der Überwurfmutter 2 ein.

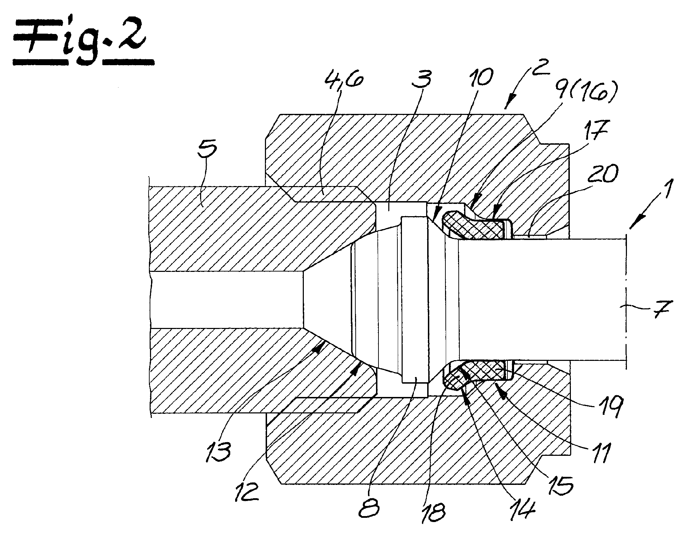

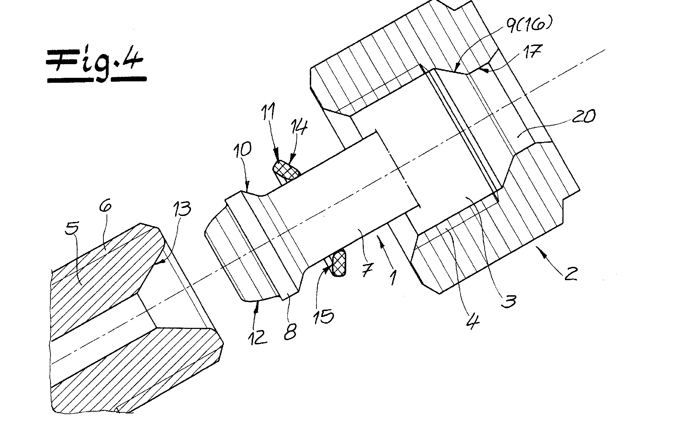

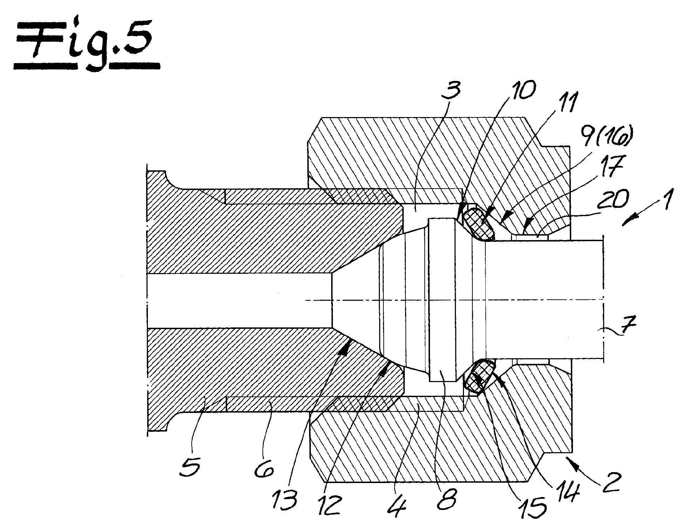

In der Überwurfmutter 2 bzw. in dem Innenraum 3 der Überwurfmutter 2 ist ein Rohrleitungsende 7 der Rohrleitung 1 aufgenommen und dieses Rohrleitungsende 7 weist einen stirnseitigen Bördel 8 auf. - Beim Verschrauben des Innengewindes 4 der Überwurfmutter 2 mit dem Außengewinde 6 des Anschlusselementes bzw. der Anschlussrohrleitung 5 wird eine im Innenraum 3 der Überwurfmutter 2 angeordnete rückseitige Anschlagfläche 9 in Richtung der Bördelrückseite 10 des Bördels 8 bewegt bzw. wird umgekehrt die Bördelrückseite 10 in Richtung der Anschlagfläche 9 der Überwurfmutter 2 bewegt (Fig. 2 und 5). Erfindungsgemäß ist zwischen der Anschlagfläche 9 der Überwurfmutter 2 und der Bördelrückseite 10 des Bördels 8 ein über den Umfang der Rohrleitung 1 umlaufendes Federelement 11 angeordnet. Zweckmäßigerweise und im Ausführungsbeispiel (Fig. 1 und 4) ist das Federelement 11 im noch nicht verschraubten Zustand der Schraubverbindungsvorrichtung an der Rohrleitung 1 angeordnet bzw. auf die Rohrleitung 1 aufgeschoben.

Im Zuge des weiteren Verschraubens der Schraubverbindungsvorrichtung kommt die Anschlagfläche 9 der Überwurfmutter 2 mit dem Federelement 11 in Kontakt bzw. das Federelement 11 kommt in Kontakt mit der Bördelrückseite 10, so dass das Federelement 11 im Zwischenraum zwischen Anschlagfläche 9 und Bördelrückseite 10 gleichsam eingeklemmt wird. Vorzugsweise und im Ausführungsbeispiel wird das Federelement dabei komprimiert. Es liegt im Rahmen der Erfindung, dass das Federelement 11 aus einem Metall und bevorzugt aus Stahl besteht.

Im verschraubten Zustand der Schraubverbindungsvorrichtung liegt zweckmäßigerweise der Bördel 8 des Rohrleitungsendes 7 mit einer Anschlussfläche 12 dichtend an einer Komplementäranschlussfläche 13 der Anschlussrohrleitung 5 an. Vorzugsweise und im Ausführungsbeispiel ist sowohl die Anschlussfläche 12 des Bördels 8 als auch die Komplementäranschlussfläche 13 der Anschlussrohrleitung 5 konisch ausgebildet.

Empfohlenermaßen und im Ausführungsbeispiel ist die Anschlagfläche 9 der Überwurfmutter 2 schräg in Bezug auf die Längsachse L der Rohrleitung 1 angeordnet. Bevorzugt und im Ausführungsbeispiel schließt die Anschlagfläche 9 der Überwurfmutter 2 im verschraubten Zustand der Schraubverbindungsvorrichtung mit der Längsachse L der Rohrleitung 1 einen Winkel α von 35° bis 45° und insbesondere einen Winkel α von etwa 40° ein. Zweckmäßigerweise ist die überwurfmutterseitige Anschlagfläche 14 des Federelementes 11 schräg zur Längsachse L der Rohrleitung 1 angeordnet und empfohlenermaßen schließt die überwurfmutterseitige Anschlagfläche 14 im verschraubten Zustand der Schraubverbindungsvorrichtung mit der Längsachse L der Rohrleitung 1 ebenfalls einen Winkel α₁ von 35° bis 45° und insbesondere einen Winkel α₁ von 40° ein. Es empfiehlt sich, dass auch die bördelseitige Anschlagfläche 15 des Federelementes 11 schräg zur Längsachse L der Rohrleitung 1 angeordnet ist und dass diese bördelseitige Anschlagfläche 15 im verschraubten Zustand der Schraubverbindungsvorrichtung einen Winkel α₂ von 35° bis 45° und insbesondere einen Winkel α₂ von etwa 40° mit der Längsachse L der Rohrleitung 1 einschließt. Fernerhin ist es bevorzugt, dass die Bördelrückseite 10 des Bördels 8 der Rohrleitung 1 schräg in Bezug auf die Längsachse L der Rohrleitung 1 angeordnet ist und dass die Bördelrückseite 10 im verschraubten Zustand der Schraubverbindungsvorrichtung einen Winkel α₃ von 35° bis 45° und vorzugsweise von etwa 40° mit der Längsachse L der Rohrleitung 1 einschließt.

Die Fig. 1 bis 3 zeigen eine erste Ausführungsform der erfindungsgemäßen Schraubverbindungsvorrichtung. Bei dieser Ausführungsform ist die Anschlagfläche 9 der Überwurfmutter 2 Bestandteil einer Anschlagschulter 16 der Überwurfmutter 2 und an die Anschlagfläche 9 schließt hier eine zur Anschlagfläche 9 abgewinkelte Anlagefläche 17 an. Vorzugsweise und im Ausführungsbeispiel ist die Anlagefläche 17 parallel zur Längsachse L der Rohrleitung 1 angeordnet. Empfohlenermaßen und im Ausführungsbeispiel schließen die Anschlagfläche 9 und die Anlagefläche 17 den Winkel α₄ von vorzugsweise 35° bis 45° und insbesondere 40° ein. Bei dieser Ausführungsform weist das Federelement 11 zweckmäßigerweise einen Anschlagabschnitt 18 auf, an dem die überwurfmutterseitige Anschlagfläche 14 und die bördelseitige Anschlagfläche 15 vorgesehen sind. Fernerhin weist das Federelement 11 einen zum Anschlagabschnitt 18 abgewinkelten Anlageabschnitt 19 auf, der bevorzugt und im Ausführungsbeispiel parallel zur Längsachse L der Rohrleitung 1 angeordnet ist. Hier schließt der Anschlagabschnitt 18 des Federelementes 11 mit dem Anlageabschnitt 19 den Winkel α₅ von vorzugsweise 35° bis 45° und insbesondere von 40° ein. Der Anlageabschnitt 19 liegt einerseits an der Anlagefläche 17 der Anschlagschulter 16 an und anderseits an der Rohrleitung 1. Den Fig. 1 bis 3 ist entnehmbar, dass die Anschlagschulter 16 unmittelbar an eine zentralmittige Öffnung 20 der Überwurfmutter 2 anschließt, die von der Rohrleitung 1 durchgriffen wird.

Die Fig. 4 bis 6 zeigen eine zweite nicht erfindungsgemäße Ausführungsform der Schraubverbindungsvorrichtung. Hier ist das Federelement 11 kürzer ausgebildet als im Ausführungsbeispiel nach den Fig. 1 bis 3 und das Federelement 11 ist lediglich zwischen der Anschlagfläche 9 der Überwurfmutter 2 und der Bördelrückseite 10 des Bördels 8 angeordnet. Das Federelement 11 entspricht hier quasi nur dem Anschlagabschnitt 18 der vorstehend erläuterten ersten Ausführungsform der Erfindung. Zweckmäßigerweise und im Ausführungsbeispiel schließt die Anschlagfläche 9 bei dieser Ausführungsform unmittelbar an die zentralmittige Öffnung 20 der Überwurfmutter 2 an, die von der Rohrleitung 1 durchgriffen wird.

In den Figuren ist angedeutet worden, dass zumindest die bördelseitige Anschlagfläche 15 des Federelementes 11 mit einer Beschichtung 21 mit einem geringen Reibwert µ versehen ist. Dadurch kann ein Auftreten von nachteilhaften Torsionskräften verhindert werden und dem unbeabsichtigten Lösen der Schraubverbindung entgegengewirkt werden.

## Patentansprüche

1. Schraubverbindungsvorrichtung für Rohrleitungen (1), insbesondere für Kraftfahrzeugrohrleitungen, - mit einer Überwurfmutter (2) mit einem Innenraum (3) und mit einem über den Umfang des Innenraumes (3) umlaufenden Innengewinde (4) sowie mit einem Anschlusselement (5) mit Außengewinde (6),
wobei in der Überwurfmutter (2) ein Rohrleitungsende (7) einer Rohrleitung (1) aufgenommen ist, wobei das Rohrleitungsende (7) eine stirnseitige Endform (8) aufweist,
wobei beim Verschrauben des Innengewindes (4) der Überwurfmutter (2) mit dem Außengewinde (6) des Anschlusselementes eine im Innenraum (3) der Überwurfmutter (2) angeordnete Anschlagfläche (9) in Richtung der Endformrückseite (10) der Endform (8) bewegbar ist bzw. umgekehrt,
wobei zwischen der Anschlagfläche (9) und der Endformrückseite (10) ein über den Umfang der Rohrleitung (1) umlaufendes Federelement (11) angeordnet ist,
wobei die Endform (8) des Rohrleitungsendes (7) im verschraubten Zustand der Schraubverbindungsvorrichtung mit einer Anschlussfläche (12) in eine von einer Komplementäranschlussfläche (13) gebildete Ausnehmung des Anschlusselementes eingreift und an der Komplementäranschlussfläche (13) des Anschlusselementes anliegt, **dadurch gekennzeichnet,**
**dass** das Federelement (11) einen Anschlagabschnitt (18) aufweist, an dem eine überwurfmutterseitige Anschlagfläche (14) und eine endformseitige Anschlagfläche (15) des Federelementes (11) vorgesehen sind sowie einen zum Anschlagabschnitt (18) abgewinkelten Anlageabschnitt (19) aufweist und dass der abgewinkelte Anlageabschnitt (19) parallel bzw. im Wesentlichen parallel zur Längsachse L der Rohrleitung (1) angeordnet ist.

2. Schraubverbindungsvorrichtung nach Anspruch 1, **dadurch gekennzeichnet, dass** das Anschlusselement eine Anschlussrohrleitung (5) oder eine mit einer Anschlussrohrleitung (5) verbundene oder eine Anschlussrohrleitung (5) aufnehmende Anschlusseinrichtung ist.

3. Schraubverbindungsvorrichtung nach einem der Ansprüche 1 bis 2, **dadurch gekennzeichnet, dass** die Anschlagfläche (9) der Überwurfmutter (2) im Zuge des Verschraubens mit dem Federelement (11) in Kontakt kommt und das Federelement (11) in Kontakt mit der Endformrückseite (10) kommt, so dass das Federelement (11) im Zwischenraum zwischen der Anschlagfläche (9) und der Endformrückseite (10) aufgenommen bzw. eingeklemmt wird.

4. Schraubverbindungsvorrichtung nach einem der Ansprüche 1 bis 3, **dadurch gekennzeichnet, dass** das Federelement (11) im Zuge des Verschraubens verformt wird.

5. Schraubverbindungsvorrichtung nach einem der Ansprüche 1 bis 4, **dadurch gekennzeichnet, dass** das Federelement (11) aus einem Metall, vorzugsweise aus Stahl besteht.

6. Schraubverbindungsvorrichtung nach einem der Ansprüche 1 bis 5, **dadurch gekennzeichnet, dass** die Anschlagfläche (9) der Überwurfmutter (2) schräg in Bezug auf die Längsachse L der Rohrleitung (1) angeordnet ist und wobei vorzugsweise die Anschlagfläche (9) der Überwurfmutter (2) mit der Längsachse L der Rohrleitung (1) einen Winkel α von 10° bis 170°, vorzugsweise von 20° bis 60°, bevorzugt von 30° bis 50° und besonders bevorzugt von 35° bis 45° einschließt.

7. Schraubverbindungsvorrichtung nach einem der Ansprüche 1 bis 6, **dadurch gekennzeichnet, dass** die überwurfmutterseitige Anschlagfläche (14) des Federelementes (11) schräg zur Längsachse L der Rohrleitung (1) angeordnet ist und wobei bevorzugt diese überwurfmutterseitige Anschlagfläche (14) mit der Längsachse L der Rohrleitung (1) einen Winkel α₁ von 10° bis 170°, vorzugsweise von 20° bis 60°, vorzugsweise von 30° bis 50° und empfohlenermaßen von 35° bis 45° einschließt.

8. Schraubverbindungsvorrichtung nach einem der Ansprüche 1 bis 7, **dadurch gekennzeichnet, dass** die endformseitige Anschlagfläche (15) des Federelementes (11) schräg zur Längsachse L der Rohrleitung (1) angeordnet ist und wobei vorzugsweise diese endformseitige Anschlagfläche (15) des Federelementes (11) mit der Längsachse L der Rohrleitung (1) einen Winkel α₂ von 10° bis 170°, vorzugsweise von 20° bis 60°, bevorzugt von 30° bis 50° und besonders bevorzugt von 35° bis 45° einschließt.

9. Schraubverbindungsvorrichtung nach einem der Ansprüche 1 bis 8, **dadurch gekennzeichnet, dass** die Endformrückseite (10) der Endform (8) der Rohrleitung (1) schräg in Bezug auf die Längsachse L der Rohrleitung (1) angeordnet ist und wobei empfohlenermaßen diese Endformrückseite (10) mit der weise von 20° bis 60°, bevorzugt von 30° bis 50° und besonders bevorzugt von 35° bis 45° einschließt.

10. Schraubverbindungsvorrichtung nach einem der Ansprüche 1 bis 9, **dadurch gekennzeichnet, dass** die Anschlagfläche (9) der Überwurfmutter (2) Bestandteil einer Anschlagschulter (16) der Überwurfmutter (2) ist und wobei an die Anschlagfläche (9) eine zur Anschlagfläche (9) abgewinkelte Anlagefläche (17) anschließt und wobei vorzugsweise die Anlagefläche (17) parallel zur Längsachse L der Rohrleitung (1) angeordnet ist.

11. Schraubverbindungsvorrichtung nach einem der Ansprüche 1 bis 10, **dadurch gekennzeichnet, dass** das Federelement (11) lediglich bzw. im Wesentlichen lediglich zwischen der Anschlagfläche (9) der Überwurfmutter (2) und der Endformrückseite (10) der Endform (8) angeordnet ist.

12. Schraubverbindungsvorrichtung nach einem der Ansprüche 1 bis 11, **dadurch gekennzeichnet, dass** die Rohrleitung (1) eine zentralmittige Öffnung (20) der Überwurfmutter (2) durchgreift und wobei die Anschlagfläche (9) der Überwurfmutter (2) an die zentralmittige Öffnung (20) angrenzt bzw. anschließt.

13. Schraubverbindungsvorrichtung nach einem der Ansprüche 1 bis 12, **dadurch gekennzeichnet, dass** die endformseitige Anschlagfläche (15) des Federelementes (11) mit einer Beschichtung (21) mit einem geringen Reibwert µ versehen ist.

## Claims

1. A screw connection device for fluid lines (1), in particular for fluid lines of motor vehicles, having a coupling nut (2) with an interior (3) and with an internal thread (4) extending circumferentially over the circumference of the interior (3) and having a connecting element (5) with an external thread (6), wherein a fluid line end (7) of a fluid line (1) is accommodated in the coupling nut (2), wherein the fluid line end (7) has an end shape (8) at a front end thereof,
wherein, when screwing the internal thread (4) of the coupling nut (2) to the external thread (6) of the connecting element, a stop surface (9) disposed in the interior (3) of the coupling nut (2) can be moved towards the end shape back side (10) of the end shape (8) and vice versa, respectively,
wherein a spring element (11) extending circumferentially over the circumference of the fluid line (1) is disposed between the stop surface (9) and the end shape back side (10),
wherein a spring element (11) extending circumferentially over the circumference of the fluid line (1) is disposed between the stop surface (9) and the end shape back side (10),
wherein in the screwed together state of the screw connection device, the end shape (8) of the fluid line end (7) engages by means of a connecting surface (12) in a recess of the connecting element formed by a complementary connecting surface (13) and rests against the complementary connecting surface (13) of the connecting element, **characterized in**
**that** the spring element (11) has a stop section (18) at which a stop surface (14) at the coupling nut side and a stop surface (15) at the end shape side of the spring element (11) is provided, and has a contact section (19) that is angled towards the stop section (18), and that the angled contact section (19) is disposed to be parallel or substantially parallel to the longitudinal axis L of the fluid line (1).

2. The screw connection according to claim 1, **characterized in that** the connecting element is a connecting fluid line (5) or is connecting device connected to a connecting fluid line (5) or accommodating a connecting fluid line (5).

3. The screw connection device according to any one of claims 1 to 2, **characterized in that** the stop surface (9) of the coupling nut (2) comes in contact with the spring element (11) during the course of the screwing process and the spring element (11) comes in contact with the end shape back side (10) so that the spring element (11) is accommodated or clamped, respectively, in the space between the stop surface (9) and the end shape back side (10).

4. The screw connection device according to any one of claims 1 to 3, **characterized in that** the spring element (11) is deformed in the course of the screwing process.

5. The screw connection according to any one of claims 1 to 4, **characterized in that** the spring element (11) is made of a metal, preferably steel.

6. The screw connection according to any one of claims 1 to 5, **characterized in that** the stop surface (9) of the coupling nut (2) is disposed at an angle with respect to the longitudinal axis L of the fluid line (1), and wherein, preferably, the stop surface (9) of the coupling nut (2) encloses an angle α with the longitudinal axis L of the fluid line (1) of 10° to 170°, preferably 20° to 60°, preferred 30° to 50° and particularly preferred 35° to 45°.

7. The screw connection device according to any one of claims 1 to 6, **characterized in that** the stop surface (14) at the coupling nut side of the spring element (11) is disposed at an angle to the longitudinal axis L of the fluid line (1), and wherein, preferably, said stop surface (14) at the coupling nut side encloses an angle α₁ with the longitudinal axis L of the fluid line (1) of 10° to 170°, preferably 20° to 60°, preferably 30° to 50° and more preferably 35° to 45°.

8. The screw connection device according to any one of claims 1 to 7, **characterized in that** the stop surface (15) at the end shape side of the spring element (11) is disposed at an angle to the longitudinal axis L of the fluid line (1) and wherein, preferably, said stop surface (15) at the end shape side of the spring element (11) encloses an angle α₂ with the longitudinal axis L of the fluid line (1) of 10° to 170°, preferably 20° to 60°, preferred 30° to 50°, and particularly preferred 35° to 45°.

9. The screw connection device according to any one of claims 1 to 8, **characterized in that** the end shape back side (10) of the end shape (8) of the fluid line (1) is disposed at an angle with respect to the longitudinal axis L of the fluid line (1), and wherein it is recommended that this end shape back side (10) encloses an angle α₃ with the longitudinal axis L of the fluid line (1) of 10° to 170°, preferably 20° to 60°, preferred 30° to 50° and particularly preferred 35° to 45°.

10. The screw connection device according to any one of claims 1 to 9, **characterized in that** the stop surface (9) of the coupling nut (2) is an integral part of a stop shoulder (16) of the coupling nut (2), and wherein a stop surface (17) that is angled towards the stop surface (9) is connected to the stop surface (9), and wherein, preferably, the contact surface (17) is disposed parallel to the longitudinal axis L of the fluid line (1).

11. The screw connection device according to any one of claims 1 to 10, **characterized in that** the spring element (11) is disposed only or substantially only between the stop surface (9) of the coupling nut (2) and the end shape back side (10) of the end shape (8).

12. The screw connection device according to any one of claims 1 to 11, **characterized in that** the fluid line (1) passes through a central opening (20) of the coupling nut (2), and wherein the stop surface (9) of the coupling nut (2) adjoins or is connected to the central opening (20).

13. The screw connection device according to any one of claims 1 to 12, **characterized in that** the stop surface (15) at the end shape side of the spring element (11) is provided with a coating (21) having a low friction coefficient µ.

## Revendications

1. Dispositif de raccord à vis pour tuyauteries (1), en particulier pour tuyauteries de véhicule, avec un écrou d'accouplement (2) avec un espace intérieur (3) et avec un filetage intérieur (4) passant autour sur la périphérie de l'espace intérieur (3) ainsi qu'avec un élément de raccord (5) avec un filetage extérieur (6),
pour lequel une extrémité de tuyauterie (7) d'une tuyauterie (1) est logée dans l'écrou d'accouplement (2), l'extrémité de tuyauterie (7) présentant une forme d'extrémité frontale (8),
pour lequel lors du vissage du filetage intérieur (4) de l'écrou d'accouplement (2) avec le filetage extérieur (6) de l'élément de raccord, une surface de butée (9) disposée dans l'espace intérieur (3) de l'écrou d'accouplement (2) peut être mobile en direction de la face arrière de forme d'extrémité (10) de la forme d'extrémité (8) ou inversement,
pour lequel un élément à ressort (11) passant autour sur la périphérie de la tuyauterie (1) est disposé entre la surface de butée (9) et la face arrière de forme d'extrémité (10),
pour lequel la forme d'extrémité (8) de l'extrémité de tuyauterie (7) vient, à l'état vissé du dispositif de raccord à vis pour tuyauterie, en prise avec une surface de raccord (12) dans un 0 évidement de l'élément de raccord, formé par une surface de raccord complémentaire (13) et vient contre la surface de raccord complémentaire (13) de l'élément de raccord, **caractérisé en ce que**
l'élément à ressort (11) comporte une section de butée (18) sur laquelle sont prévues une surface de butée (14) côté écrou d'accouplement et une surface de butée (15) de l'élément à ressort (11), côté de la forme d'extrémité et comporte également une section d'appui (19) repliée vers la section de butée (18) et
**en ce que** la section d'appui repliée (19) est disposée parallèle ou pour l'essentiel parallèlement à l'axe longitudinal L de la tuyauterie (1).

2. Dispositif de raccord à vis selon la revendication 1 **caractérisé en ce que** l'élément de raccord est une tuyauterie de raccord (5) ou un dispositif de raccord relié à une tuyauterie de raccord (5) ou logeant une tuyauterie de raccord (5).

3. Dispositif de raccord à vis selon l'une quelconque des revendications 1 à 2 **caractérisé en ce que** la surface de butée (9) de l'écrou d'accouplement (2) vient au cours du vissage en contact avec l'élément à ressort (11) et l'élément à ressort (11) vient en contact avec la face arrière de forme d'extrémité (10) de sorte que l'élément à ressort (11) est logé ou serré dans l'espace intermédiaire entre la surface de butée (9) et la face arrière de forme d'extrémité (10).

4. Dispositif de raccord à vis selon l'une quelconque des revendications 1 à 3 **caractérisé en ce que** l'élément à ressort (11) est déformé au cours du vissage.

5. Dispositif de raccord à vis selon l'une quelconque des revendications 1 à 4 **caractérisé en ce que** l'élément à ressort (11) est composé d'un métal, de préférence d'acier.

6. Dispositif de raccord à vis selon l'une quelconque des revendications 1 à 5 **caractérisé en ce que** la surface de butée (9) de l'écrou d'accouplement (2) est disposée inclinée par rapport à l'axe longitudinal L de la tuyauterie (1) et pour lequel I a surface de butée (9) de l'écrou d'accouplement (2) comprend de préférence avec l'axe longitudinal L de la tuyauterie (1) un angle α de 10° à 170°, de préférence de 20° à 60°, de façon privilégiée de 30° à 50° et de façon particulièrement privilégiée de 35° à 45°.

7. Dispositif de raccord à vis selon l'une quelconque des revendications 1 à 6 **caractérisé en ce que** la surface de butée côté écrou d'accouplement (14) de l'élément à ressort (11) est disposée inclinée par rapport à l'axe longitudinal L de la tuyauterie (1) et pour lequel cette surface de butée (14) côté écrou d'accouplement comprend de façon privilégiée avec l'axe longitudinal L de la tuyauterie (1) un angle α₁ de 10° à 170°, de préférence de 20° à 60°, de préférence de 30° à 50° et de façon recommandée de 35° à 45°.

8. Dispositif de raccord à vis selon l'une quelconque des revendications 1 à 7 **caractérisé en ce que** la surface de butée (15) côté de la forme d'extrémité de l'élément à ressort (11) est disposée inclinée par rapport à l'axe longitudinal L de la tuyauterie (1) et pour lequel cette surface de butée (15) côté de la forme d'extrémité de l'élément à ressort (11) comprend de préférence avec l'axe longitudinal L de la tuyauterie (1) un angle α₂ de 10° à 170°, de préférence de 20° à 60°, de façon privilégiée de 30° à 50° et de façon particulièrement privilégiée de 35° à 45°.

9. Dispositif de raccord à vis selon l'une quelconque des revendications 1 à 8 **caractérisé en ce que** la face arrière de forme d'extrémité (10) de la forme d'extrémité (8) de la tuyauterie (1) est disposée inclinée par rapport à l'axe longitudinal L de la tuyauterie (1) et pour lequel cette face arrière de forme d'extrémité (10) comprend de façon recommandée avec l'axe longitudinal L de la tuyauterie (1) un angle α₃ de 10° à 170°, de préférence de 20° à 60°, de façon privilégiée de 30° à 50° et de façon particulièrement privilégiée de 35° à 45°.

10. Dispositif de raccord à vis selon l'une quelconque des revendications 1 à 9 **caractérisé en ce que** la surface de butée (9) de l'écrou d'accouplement (2) fait partie intégrante d'un épaulement de butée (16) de l'écrou d'accouplement (2) et pour lequel une surface d'appui (17) repliée vers la surface de butée (9) se raccorde à la surface de butée (9) et pour lequel la surface d'appui (17) est disposée de préférence parallèle à l'axe longitudinal L de la tuyauterie (1).

11. Dispositif de raccord à vis selon l'une quelconque des revendications 1 à 10 **caractérisé en ce que** l'élément à ressort (11) est disposé uniquement ou pour l'essentiel uniquement entre la surface de butée (9) de l'écrou d'accouplement (2) et la face arrière de forme d'extrémité (10) de la forme d'extrémité (8).

12. Dispositif de raccord à vis selon l'une quelconque des revendications 1 à 11 **caractérisé en ce que** la tuyauterie (1) passe à travers une ouverture centrale (20) de l'écrou d'accouplement (2) et pour lequel la surface de butée (9) de l'écrou d'accouplement (2) est limitrophe à l'ouverture centrale (20) ou s'y raccorde.

13. Dispositif de raccord à vis selon l'une quelconque des revendications 1 à 12 **caractérisé en ce que** la surface de butée (15) côté de la forme d'extrémité de l'élément à ressort (11) est munie d'un revêtement (21) avec un faible coefficient de frottement µ.
